(19)

Europäisches Patentamt
European Patent Office
Office européen des brevets

(11) **EP 4 503 176 A1**

(12) **EUROPEAN PATENT APPLICATION**
published in accordance with Art. 153(4) EPC

(43) Date of publication:
**05.02.2025 Bulletin 2025/06**

(21) Application number: **23792219.0**

(22) Date of filing: **20.04.2023**

(51) International Patent Classification (IPC):
**H01M 4/1391** *(2010.01)*     **H01M 4/525** *(2010.01)*
**H01M 4/58** *(2010.01)*       **H01M 4/62** *(2006.01)*
**H01M 4/66** *(2006.01)*       **H01M 4/04** *(2006.01)*
**H01M 4/131** *(2010.01)*      **H01M 4/136** *(2010.01)*
**H01M 4/1397** *(2010.01)*

(52) Cooperative Patent Classification (CPC):
**H01M 4/02; H01M 4/04; H01M 4/131; H01M 4/136;
H01M 4/1391; H01M 4/1397; H01M 4/505;
H01M 4/525; H01M 4/58; H01M 4/62; H01M 4/66;
H01M 10/052;** Y02E 60/10

(86) International application number:
**PCT/KR2023/005412**

(87) International publication number:
**WO 2023/204645 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022 KR 20220049211**

(71) Applicant: **LG Energy Solution, Ltd.
Seoul 07335 (KR)**

(72) Inventors:
• **YOON, Kyung-Hwan
Daejeon 34122 (KR)**
• **SHIN, Dong-Mok
Daejeon 34122 (KR)**
• **KANG, Seong-Wook
Daejeon 34122 (KR)**
• **LEE, Nam-Jeong
Daejeon 34122 (KR)**
• **YOO, Kwang-Ho
Daejeon 34122 (KR)**

(74) Representative: **Plasseraud IP
104 Rue de Richelieu
CS92104
75080 Paris Cedex 02 (FR)**

(54) **FILM FOR ELECTRODE, ELECTRODE COMPRISING SAME, SECONDARY BATTERY, AND METHOD FOR MANUFACTURING SAME**

(57)     Disclosed is an electrode film, including an active material and a fluorine-containing binder, wherein the fluorine-containing binder includes a polytetrafluoroethylene (PTFE) binder, the active material includes a lithium transition metal oxide and the content of the fluorine-containing binder is 0.5-10 parts by weight based on 100 parts by weight of the total weight of the electrode film, and which shows an elongation at break of 7% or more. Also disclosed are an electrode including the electrode film, a secondary battery and an energy storage system.

FIG. 1

EP 4 503 176 A1

**Description**

TECHNICAL FIELD

The present disclosure relates to an electrode film, an electrode including the same, a secondary battery, and a method for manufacturing the same. Particularly, the present disclosure relates to an electrode film having improved mechanical properties, an electrode including the same, a secondary battery, and a method for manufacturing the same.

The present application claims priority to Korean Patent Application No. 10-2022-0049211 filed on April 20, 2022 in the Republic of Korea, the disclosures of which are incorporated herein by reference.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry. Currently, typical examples of electrochemical devices using electrochemical energy include secondary batteries, and application thereof has been extended gradually. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.

A process of manufacturing such a lithium secondary battery is broadly divided into the three steps of an electrode-forming step, an electrode assembly-forming step and an aging step. The electrode-forming step is further divided into an electrode mixture-mixing step, an electrode coating step, a drying step, a pressing step, a slitting step, a winding step, or the like.

Among the steps, the electrode mixture-mixing step is a step of mixing the ingredients for forming an electrode active layer configured to carry out electrochemical reactions actually in the electrode. Particularly, an electrode active material as an essential element of the electrode is mixed with other additives, including a conductive material and a filler, a binder used for the binding of powder particles among themselves and the adhesion to a current collector, a solvent for imparting viscosity and dispersing a powder, or the like, to prepare a slurry having flowability.

Then, an electrode-coating step of applying the slurry onto a current collector having electrical conductivity and a drying step of removing the solvent contained in the electrode mixture are carried out, and then the resultant electrode is pressed to a predetermined thickness.

Meanwhile, as the solvent contained in the electrode mixture evaporates during the drying step, defects, such as pinholes or cracks, may be generated in the preliminarily formed electrode active layer. In addition, the electrode active layer is not dried uniformly at the internal part and external part thereof, and thus a powder floating phenomenon may occur due to a difference in solvent evaporation rate. In other words, a powder present in a portion dried earlier may float, while forming a gap from a portion dried relatively later, resulting in degradation of electrode quality.

Therefore, to solve the above-mentioned problems, there has been considered a drying apparatus which allows uniform drying of the internal and external parts of an electrode active layer and can control the evaporation rate of a solvent. However, such drying apparatuses are expensive and require a lot of costs and times for their operation, and thus are disadvantageous in terms of manufacture processability.

Therefore, recently, active studies have been conducted to manufacture a dry electrode without using any solvent.

A method for manufacturing a dry electrode includes a step of subjecting a mixture of a binder (such as polytetrafluoroethylene (PTFE)) capable of fibrilization, an active material and a conductive material to a roll calendering process to obtain a free-standing electrode film. However, when the mechanical strength of the electrode film is reduced, it may function as a cause of defect in the subsequent process for manufacturing an electrode.

DISCLOSURE

Technical Problem

The present disclosure is designed to solve the problems of the related art, and therefore the present disclosure is directed to providing an electrode film having improved mechanical properties, an electrode and secondary battery including the same, and a method for manufacturing the same.

Technical Solution

In one aspect of the present disclosure, there is provided an electrode according to any one of the following embodiments.

According to the first embodiment of the present disclosure, there is provided an electrode film, including an active material and a fluorine-containing binder, wherein the fluorine-containing binder includes a polytetrafluoroethylene (PTFE) binder, the active material includes a lithium transition metal oxide and the content of the fluorine-containing binder is 0.5-10 parts by weight based on 100 parts by weight of the total weight of the electrode film, and which shows an elongation at break of 7% or more.

According to the second embodiment of the present disclosure, there is provided the electrode film as defined in the first embodiment, wherein the lithium transition metal oxide includes a lithium cobalt oxide, a lithium manganese oxide, a lithium nickel oxide, a lithium nickel-manganese-cobalt oxide, a lithium nickel-manganese-cobalt-aluminum oxide, a lithium copper oxide, or two or more of them.

According to the third embodiment of the present disclosure, there is provided the electrode film as defined in the second embodiment, wherein the lithium nickel-manganese-cobalt-aluminum oxide is represented by the following Chemical Formula 1:

$$[\text{Chemical Formula 1}] \qquad Li_a[Ni_bCo_cMn_dAl_e]_{1-f}M^1_fO_2$$

wherein $M^1$ represents Zr, B, W, Mg, Ce, Hf, Ta, La, Ti, Sr, Ba, F, P, S, or two or more of them, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$.

According to the fourth embodiment of the present disclosure, there is provided the electrode film as defined in the second or the third embodiment, wherein the lithium nickel-manganese-cobalt-aluminum oxide is represented by the following Chemical Formula 2:

$$[\text{Chemical Formula 2}] \qquad Li_a[Ni_bCo_cMn_dAl_e]_{1-f}O_2$$

wherein $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$.

According to the fifth embodiment of the present disclosure, there is provided the electrode film as defined in any one of the first to the fourth embodiments, which shows an elongation at break of 7% or more and a tensile strength of 1.4 MPa or more.

According to the sixth embodiment of the present disclosure, there is provided the electrode film as defined in the fifth embodiment, which shows an elongation at break of 7.2-7.8%, tensile strength of 1.4 MPa and a modulus of 38.3-40.9 MPa.

According to the seventh embodiment of the present disclosure, there is provided the electrode film as defined in any one of the first to the sixth embodiments, including an active material, a fluorine-containing binder and a conductive material.

According to the eighth embodiment of the present disclosure, there is provided the electrode film as defined in the seventh embodiment, wherein the conductive material includes activated carbon, graphite, carbon black, ketjen black, carbon nanotubes, or two or more of them.

According to the ninth embodiment of the present disclosure, there is provided the electrode film as defined in the seventh or the eighth embodiment, wherein the content of the active material is 85-98 parts by weight, the content of the conductive material is 0.5-5 parts by weight, and the content of the fluorine-containing binder is 0.5-10 parts by weight.

According to the tenth embodiment of the present disclosure, there is provided the electrode film as defined in any one of the first to the ninth embodiments, which is obtained through a dry process.

According to the eleventh embodiment of the present disclosure, there is provided a method for manufacturing the electrode film as defined in any one of the first to the tenth embodiments, including the steps of:

heat treating a fluorine-containing binder at 290-310°C;
preparing a mixture containing an active material and the heat-treated fluorine-containing binder;
kneading the mixture at 70-200°C under a pressure equal to or higher than ambient pressure to prepare mixture lumps;
pulverizing the mixture lumps to obtain a mixed powder for an electrode; and
introducing the mixed powder for an electrode between a plurality of rolls to carry out calendering, thereby forming an electrode film.

According to the twelfth embodiment of the present disclosure, there is provided the method for manufacturing the electrode film as defined in the eleventh embodiment, wherein the step of kneading the mixture to prepare mixture lumps is carried out in a kneader under a pressure equal to or higher than ambient pressure.

According to the thirteenth embodiment of the present disclosure, there is provided a method for manufacturing an electrode, including a step of laminating the electrode film as defined in any one of the first to the tenth embodiments on a current collector.

According to the fourteenth embodiment of the present disclosure, there is provided the method for manufacturing an electrode as defined in the thirteenth embodiment, wherein the electrode film has a compression ratio of 30-50% in the step of laminating.

According to the fifteenth embodiment of the present disclosure, there is provided an electrode, including: a current collector; and the electrode film as defined in any one of the first to the tenth embodiments, disposed on at least one surface of the current collector.

According to the sixteenth embodiment of the present disclosure, there is provided the electrode as defined in the fifteenth embodiment, wherein the current collector further includes a conductive primer layer on at least one surface thereof.

According to the seventeenth embodiment of the present disclosure, there is provided a secondary battery including a positive electrode, a negative electrode and a separator interposed between the positive electrode and the negative electrode, wherein at least one of the positive electrode and the negative electrode is the electrode as defined in the fifteenth or the sixteenth embodiment.

According to the eighteenth embodiment of the present disclosure, there is provided an energy storage system including the secondary battery as defined in the seventeenth embodiment as a unit cell.

Advantageous Effects

According to an embodiment of the present disclosure, an electrode film is obtained by heat treating a fluorine-containing binder at 290-310°C and mixing the heat treated binder with an active material, or the like. Herein, when the fluorine-containing binder is preliminarily heat treated, the binding of the primary particles among themselves in the secondary particles of the fluorine-containing binder (such as PTFE) is improved by virtue of melt inter-diffusion on the surface between the binder particles, thereby facilitating the fibrilization of the fluorine-containing binder in the subsequent process for manufacturing an electrode film. As a result, the electrode film includes a fluorine-containing binder the fibrilization of which is accomplished to a higher degree as compared to the conventional electrode film, and thus shows significantly improved mechanical properties and increased film productivity.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the process for manufacturing an electrode film according to an embodiment of the present disclosure.

FIG. 2 is a schematic view illustrating the electrode lamination step according to an embodiment of the present disclosure.

BEST MODE

Hereinafter, preferred embodiments of the present disclosure will be described in detail with reference to the accompanying drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise.

It will be further understood that the terms "comprises" and/or "comprising", or "includes" and/or "including" when used in this specification, do not preclude the presence of other elements but specify the additional presence of other elements, unless otherwise stated.

In one aspect of the present disclosure, there is provided an electrode film, including an active material and a fluorine-containing binder, wherein the fluorine-containing binder includes a polytetrafluoroethylene (PTFE) binder, the active material includes a lithium transition metal oxide and the content of the fluorine-containing binder is 0.5-10 parts by weight based on 100 parts by weight of the total weight of the electrode film, and which shows an elongation at break of 7% or more.

The active material includes a lithium transition metal oxide.

According to an embodiment of the present disclosure, the lithium transition metal oxide may include a lithium cobalt oxide, a lithium manganese oxide, a lithium nickel oxide, a lithium nickel-manganese-cobalt oxide, a lithium nickel-manganese-cobalt-aluminum oxide, a lithium copper oxide, or two or more of them.

Particular examples of the lithium transition metal oxide include: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); lithium nickel-manganese-cobalt-aluminum oxide represented by Chemical Formula 1; or the like.

[Chemical Formula 1]    $Li_a[Ni_bCo_cMn_dAl_e]_{1-f}M^1_fO_2$

wherein $M^1$ represents Zr, B, W, Mg, Ce, Hf, Ta, La, Ti, Sr, Ba, F, P, S, or two or more of them, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$.

According to an embodiment of the present disclosure, the lithium nickel-manganese-cobalt-aluminum oxide may be represented by the following Chemical Formula 2:

[Chemical Formula 2]    $Li_a[Ni_bCo_cMn_dAl_e]_{1-f}O_2$

wherein $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$.

Particularly, the lithium-nickel-manganese-cobalt-aluminum oxide may include $Li[Ni_{0.73}Co_{0.05}Mn_{0.15}Al_{0.02}]O_2$), or the like.

According to an embodiment of the present disclosure, the electrode film may include an active material, a fluorine-containing binder and a conductive material.

The conductive material is not particularly limited, as long as it has conductivity while not causing any chemical change in the corresponding battery. Particular examples of the conductive material include: graphite, such as natural graphite or artificial graphite; carbonaceous materials, such as carbon black, acetylene black, ketjen black, channel black, furnace black, lamp black, thermal black or carbon fibers; metal powder or metal fibers, such as copper, nickel, aluminum or silver; needle-like or branch-like conductive whisker, such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker or alumina whisker; conductive metal oxide, such as titanium dioxide; conductive polymer such as a polyphenylene derivative; or the like. Such conductive materials may be used alone or in combination. Particularly, the conductive material may include at least one selected from the group consisting of activated carbon, graphite, carbon black and carbon nanotubes, and more particularly, activated carbon, with a view to homogeneous mixing of the conductive material and improvement of conductivity.

The fluorine-containing binder may include a fluorine-containing polymer, particularly, polytetrafluoroethylene (PTFE). In addition, the fluorine-containing binder may include polytetrafluoroethylene alone, or may further include at least one selected from polyvinylidene fluoride (PVDF) and PVDF-based copolymer, such as polyvinylidene fluoride-co-hexafluoropropylene (PVDF-HFP), besides polytetrafluoroethylene.

Herein, the elongation at break of the electrode film refers to the elongation when the electrode film is broken. Particularly, the elongation at break of the electrode film refers to the strain at the time when the film is no longer deformed and is broken in the process of increasing the load applied thereto in order to deform the length of the electrode film having a predetermined dimension.

According to an embodiment of the present disclosure, the elongation at break of the electrode film may be determined by using a UTM instrument (ZwickRoell Co.) under the following test conditions.

Test Conditions: ASTM D 638, Pre-load 0.01 kg/cm, Test Speed 50 mm/min.

In addition, according to the present disclosure, the tensile strength of the electrode film refers to the maximum stress until the electrode film is broken. Particularly, the tensile strength of the electrode film refers to the value calculated by dividing the maximum tensile load by the initial sectional area of a specimen at the time when the film is no longer deformed and is broken in the process of increasing the load applied thereto in order to deform the length of the electrode film having a predetermined dimension.

The modulus is a constant that represents the ratio of deformation (stress) and distortion of an elastic body and is also called the elastic coefficient. When external force is applied to an object to cause deformation, the stress generated by the external force and the distortion generated by the deformation are in proportion to each other within a range in which the deformation is not significant (Hooke's law), and the proportional constant herein is called modulus.

As used herein, the modulus of the electrode film refers to the proportional constant of the stress against the distortion generated by the deformation of the electrode film.

According to an embodiment of the present disclosure, the tensile strength and modulus of the electrode film may be determined by using a UTM instrument (ZwickRoell Co.) under the following test conditions.

Test Conditions: ASTM D 638, Pre-load 0.01 kg/cm, Test Speed 50 mm/min.

The electrode film may show an elongation at break of 7% or more. According to an embodiment of the present disclosure, the electrode film may show an elongation at break of 7-10%, 7-9%, 7-8%, 7.2-7.8%, 7.2-7.4%, or 7.4-7.8%.

The electrode film may have a tensile strength of 1.1 MPa or more, or 1.1-1.4 MPa.

The electrode film may have a modulus of 32.7 MPa or more, 32.7-40.9 MPa, or 38.3-40.9 MPa.

The content of the fluorine-containing binder is 0.5-10 parts by weight based on 100 parts by weight of the total weight of the electrode film. According to an embodiment of the present disclosure, the content of the fluorine-containing binder may be 0.5-5 parts by weight, 0.5-3 parts by weight, or 3-10 parts by weight, based on 100 parts by weight of the total weight of the electrode film.

When the content of the fluorine-containing binder is less than 0.5 parts by weight, it is not possible to manufacture an electrode film through the molding of a mixed powder formed through a pulverization step. When the content of the fluorine-containing binder is larger than 10 parts by weight, there is a problem in that the physical properties of the film are degraded due to the non-homogeneity of mixed powder.

The electrode film may include an active material, a fluorine-containing binder and a conductive material.

According to an embodiment of the present disclosure, the content of the active material may be 85-98 parts by weight, the content of the conductive material may be 0.5-5 parts by weight, and the content of the fluorine-containing binder may be 0.5-10 parts by weight. In addition, the content of the active material is 85-96 parts by weight, 90-98 parts by weight, 90-96 parts by weight, or 96-98 parts by weight, the content of the conductive material may be 0.5-5 parts by weight, 0.5-1 parts by weight, or 1-5 parts by weight, and the content of the fluorine-containing binder may be 0.5-5 parts by weight, 3-5 parts by weight, or 3-10 parts by weight.

When the content of the active material, that of the conductive material and that of the fluorine-containing binder satisfy the above-defined ranges, the fluorine-containing binder may be sufficiently fibrilized in the subsequent kneading step to form mixture lumps, an electrode film may be obtained with ease through the molding of a mixed powder formed through a pulverization step, the physical properties of the electrode film may be ensured, the content of the active material may be ensured to prevent the problem of a decrease in capacity, and sufficient conductivity may be ensured.

Meanwhile, a filler as an ingredient for inhibiting electrode swelling may be further introduced optionally to the electrode layer. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

In another aspect of the present disclosure, there is provided an electrode, including:

a current collector; and
the electrode film according to an embodiment of the present disclosure, disposed on at least one surface of the current collector.

The current collector is not particularly limited, as long as it has high conductivity, while not causing any chemical change in the corresponding battery. Particular examples of the current collector include stainless steel, aluminum, nickel, titanium, baked carbon, copper, aluminum or stainless steel surface-treated with carbon, nickel, titanium, silver, or the like. In addition, fine surface irregularities may be formed on the surface of the current collector to enhance the binding force with the positive electrode active material. The current collector may be used in various shapes, including a film, a sheet, a foil, a net, a porous body, a foamed body, a non-woven web, or the like.

Further, the current collector may be totally or partially coated with a conductive primer layer in order to reduce the resistance at the surface and to improve the adhesion. Herein, the conductive primer layer may include a conductive material and a binder. The conductive material is not particularly limited, as long as it has conductivity. For example, the conductive material may include a carbonaceous material, metallic material (metal powder or metal fibers), conductive whisker, conductive metal oxide, conductive polymer, or the like. The carbonaceous material may include natural graphite, artificial graphite, graphene, carbon black, denka black, acetylene black, ketjen black, Super-P, channel black, furnace black, lamp black, thermal black, carbon nanotubes, graphite nanofibers, carbon nanofibers, or the like. The metallic material may include copper, nickel, aluminum, silver, or the like, the conductive whisker may include zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, alumina whisker, or the like, the conductive metal oxide may include titanium dioxide, or the like, and the conductive polymer may include a polyphenylene derivative, or the like. Such materials may be used alone or in combination.

The binder may be a fluorine-based binder (including PVDF and PVDF copolymer) or acrylic binder that can be dissolved in a solvent, and may include an aqueous binder, such as styrene butadiene rubber (SBR).

In still another aspect of the present disclosure, there is provided a method for manufacturing the electrode film according to an embodiment of the present disclosure, including the steps of:

> heat treating a fluorine-containing binder at 290-310°C;
> preparing a mixture containing an active material and the heat-treated fluorine-containing binder;
> kneading the mixture at 70-200°C under a pressure equal to or higher than ambient pressure to prepare mixture lumps;
> pulverizing the mixture lumps to obtain a mixed powder for an electrode; and
> introducing the mixed powder for an electrode between a plurality of rolls to carry out calendering, thereby forming an electrode film.

Hereinafter, the method for manufacturing an electrode film according to the present disclosure will be explained in more detail.

First, a fluorine-containing binder is heat treated at 290-310°C.

When the fluorine-containing binder is preliminarily heat treated separately before it is mixed with the active material, the primary particles in the secondary particles of the fluorine-containing binder (such as PTFE) are bound firmly to one another by virtue of the melt inter-diffusion on the surface between the binder particles. As a result, fibrilization of the fluorine-containing binder may occur with ease in the subsequent step of forming an electrode film.

The electrode film including the fluorine-containing binder the fibrilization of which is accomplished to a higher degree as compared to the conventional electrode film shows significantly improved mechanical properties and increased film productivity.

The heat treatment of the fluorine-containing binder may be carried out by using a device, such as a furnace, under the atmosphere of air.

The heat treatment temperature of the fluorine-containing binder is 290-310°C. According to an embodiment of the present disclosure, the heat treatment temperature of the fluorine-containing binder may be 290-300°C, 300-310°C, 292-308°C, or 293-307°C.

When the heat treatment temperature of the fluorine-containing binder is lower than 290°C, there is no effect of heat treatment. When the heat treatment temperature is higher than 310°C, it is not possible to carry out sheeting, which is disadvantageous in terms of film processing.

Next, a mixture including an active material and the heat treated fluorine-containing binder is prepared.

Herein, the mixing for preparing the mixture is carried out in such a manner that the electrode active material and the heat treated fluorine-containing binder may be distributed homogeneously. In addition, since the mixture is mixed in the form of a powder, any mixing process capable of simple mixing of the ingredients may be used with no particular limitation, and the ingredients may be mixed through various processes. However, since the electrode film according to the present disclosure is manufactured as a dry electrode using no dispersion medium, the mixing may be carried out through a dry mixing process, and the ingredients may be introduced to an instrument, such as a blender, to carry out the mixing. According to an embodiment of the present disclosure, the mixture may be prepared by further introducing a conductive material, or the like, in addition to the active material and the heat treated fluorine-containing binder.

In addition, the mixing may be carried out in a mixer at 5,000-20,000 rpm for 30 seconds to 2 minutes, particularly, at 10,000-15,000 rpm for 30 seconds to 1 minute to ensure homogeneity.

The fluorine-containing binder is not particularly limited, as long as it is capable of fine fibrilization by the step of preparing the mixed powder and contains fluorine as described above. The fine fibrilization refers to treatment of finely dividing a polymer, and for example, may be carried out by using a mechanical shear force, or the like. Particular examples of the fluorine-containing binder may include the fluorine-containing polymers as mentioned above, and particularly may include polytetrafluoroethylene (PTFE) alone or in combination with at least one PVDF-based polymer, such as polyvinylidene fluoride (PVDF) or polyvinylidene fluoride-co-hexafluoropropylene (PVDF-HFP).

Next, the mixture is kneaded at 70-200°C under a pressure equal to or higher than ambient pressure to prepare mixture lumps.

According to the related art, high-shear mixing, such as jet milling, was carried out to fibrilize a binder. However, in this case, there is a problem in that an active material is micronized by the mixing and the resultant fibers may be cut. According to the present disclosure, the problem is solved by using a low-shear kneading process instead of high-shear mixing.

The kneading is not limited to a particular process. According to an embodiment of the present disclosure, the kneading may be carried out through a kneader, or the like.

The kneading step is a step of binding or connecting the active material and the conductive material powder particles, while the fluorine-containing binder is fibrilized, thereby forming mixture lumps having a solid content of 100%.

Particularly, the kneading may be controlled to a kneading rate of 10-100 rpm. For example, the kneading rate may be controlled to 20-70 rpm within the above-defined range. The kneading may be carried out for 1-30 minutes. For example, the kneading may be carried out at a rate of 40-70 rpm for 3-10 minutes within the above-defined ranges. Meanwhile, the kneading may be controlled to a shear rate of 10/s to 500/s. According to an embodiment of the present disclosure, the kneading may be carried out for 1-30 minutes, and the shear rate may be controlled to 30/s to 100/s.

Meanwhile, the kneading step may be carried out at high temperature under a pressure condition of ambient pressure or higher, particularly, a pressure condition higher than ambient pressure.

More particularly, the kneading of the mixture may be carried out at 70-200°C, specifically 90-150°C.

When the kneading is carried out at a low temperature beyond the above-defined temperature range, it is not possible to perform the fibrilization of the fluorine-containing binder during the kneading and lump formation through kneading sufficiently. As a result, it is not possible to form a film with ease during calendering. On the other hand, when the kneading is carried out at an excessively high temperature, the fluorine-containing binder may be fibrilized rapidly, and the resultant fibers may be cut by excessive shear force, undesirably.

In addition, the kneading may be carried out under a pressure equal to or higher than ambient pressure, particularly 1-100 atm, and more particularly 10-80 atm. When the above-defined pressure range is satisfied, it is possible to prevent the problems of cutting of the resultant fibers, caused by the application of excessive shear force and pressure, and an excessive increase in the density of the mixture lumps. In other words, according to the present disclosure, it is possible to accomplish desired effects, when a low-shear mixing step is carried out at high temperature under a pressure condition equal to or higher than ambient pressure, instead of high-shear mixing.

Then, the mixture lumps are pulverized to obtain a mixed powder for an electrode.

Particularly, the mixture lumps prepared through the kneading may be directly subjected to calendering. However, in this case, it is required to press the mixture lumps to convert them into a thin film. As a result, there are problems in that the film may have excessively high density, or a uniform film cannot be obtained. Therefore, according to the present disclosure, the mixture lumps are subjected to a pulverization step.

Herein, the pulverization step may be carried out by using a known pulverizing instrument, such as a blender or a grinder, but is not limited thereto. Particularly, the pulverization step may be carried out at a rate of 5,000-20,000 rpm for 30 seconds to 10 minutes, more particularly, at a rate of 10,000-18,000 rpm for 30 seconds to 2 minutes.

When the above-defined pulverization rate and time are satisfied, it is possible to carry out pulverization sufficiently, and thus to form a powder having a size suitable for filming and to prevent the problem of generation of a large amount of fine powder from the mixture limps. If necessary, a classification step for screening a powder having a size smaller or larger than a predetermined size may be carried out.

After that, the mixed powder for an electrode is introduced between a plurality of rolls to carry out calendering, thereby forming an electrode film.

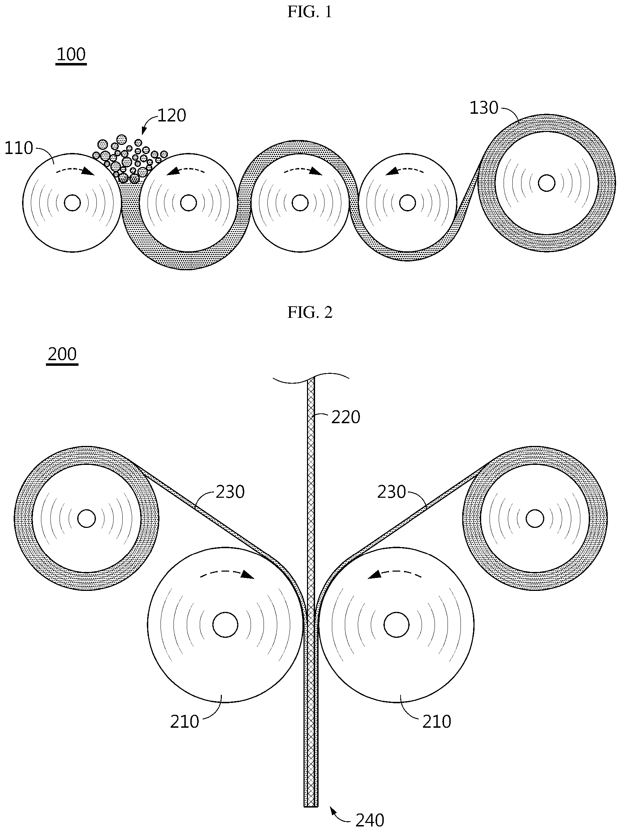

Referring to FIG. 1, step 100 of forming an electrode film is illustrated, wherein a plurality of rolls 110 is disposed while being spaced apart from each other. The mixed powder 120 for an electrode obtained from the preceding step is introduced between the adjacent rolls 110, and the rolls 110 are rotated in the opposite direction. In this manner, the mixed powder 120 is pressed, and then is subjected to a powder sheeting step so that it may be molded into a sheet or a film. Then, calendering is carried out many times to obtain an electrode film having a final target thickness.

Particularly, the calendering includes processing the mixed powder for an electrode into the shape of a film. For example, the mixed powder for an electrode may be molded into a film having an average thickness of 50-300 $\mu$m.

Herein, the calendering may be carried out by using rolls facing each other, wherein the roll temperature may be 50-200°C and the roll rotation speed ratio may be controlled to a range of 1.0-2.0.

After the calendering step is finished, a dry electrode film functioning as an electrode mixture may be obtained. The dry electrode film may also be called a free-standing film according to the related art.

The resultant dry electrode film includes no solvent and has little flowability, and thus can be handled with ease and processed into a desired shape to be used for manufacturing electrodes with various shapes. In addition, when using the dry electrode film according to the present disclosure for manufacturing an electrode, a drying step for removing a solvent can be eliminated, and thus the production processability of the electrode can be improved significantly, and the problems of the methods for manufacturing a dry electrode according to the related art, such as the brittleness of an active material or cutting of a fibrilized fluorine-containing binder, can be solved.

Meanwhile, according to the present disclosure, the dry electrode film may have a porosity of 20-50 %. Within the above-defined range, the porosity may be controlled preferably to a value of 40 % or less, or 30 % or less. When the porosity satisfies the above-defined range, it is possible to facilitate wetting with an electrolyte, resulting in improvement of life characteristics, output characteristics, or the like. In addition, energy density based on volume can be improved, since the volume required to realize the same capacity is not increased. According to an embodiment of the present disclosure, the porosity may be obtained by determining the apparent density of the dry electrode film and by using the true density calculated based on the true density of each ingredient and composition, according to the following Formula:

$$\text{Porosity } (\%) = \{1 - (\text{Apparent density/True density})\} \times 100$$

In still another aspect of the present disclosure, there is provided a method for manufacturing an electrode, including a step of laminating the electrode film according to an embodiment of the present disclosure on a current collector.

The lamination step may be a step of pressing and adhering the electrode film obtained by the method for manufacturing the electrode film according to an embodiment of the present disclosure onto a current collector to a desired thickness. The lamination may also be carried out by using a lamination roll, wherein the lamination roll may be maintained at a temperature of 25-250°C.

According to an embodiment of the present disclosure, the electrode film may have a compression ratio of 30-50%, 35-50%, or 40-50%.

The compression ratio of the electrode film may be defined as the ratio of the compressed thickness of the electrode film at the moment of lamination, and may be represented by the following Formula 1:

[Formula 1]

$$\text{Compression ratio } (\%) = T_p/T_1 \times 100$$

wherein $T_p$ represents the pressurized thickness of an electrode film in the lamination step, and $T_1$ represents the thickness of the electrode film before the lamination step.

According to the present disclosure, the lamination step may be controlled to satisfy a specific compression ratio. In this manner, it is possible to provide the electrode film with adequate density and porosity, and to realize excellent adhesion between the electrode film and the current collector.

When the electrode film satisfies a compression ratio of 30-50%, the pressure applied to the electrode film is sufficient so that the adhesion between the electrode film and the current collector may be improved. In addition, it is possible to prevent the problem of detachment of the electrode film from the current collector after the lamination step, and to solve the problem of an undesired increase in density of the electrode film, a decrease in porosity of the electrode film as compared to a target porosity, or damages to the current collector.

According to an embodiment of the present disclosure, when the electrode film is laminated onto both surfaces of the current collector, the compression ratio (%) of Formula 1 may be expressed by the following Formula 2:

[Formula 2]

$$30 \leq (T_1 + 0.5T_c - 0.5T_{gap})/T_1 \times 100 \leq 50$$

wherein $T_1$ represents the thickness of an electrode film before the lamination step, $T_c$ represents the thickness of a current collector, and $T_{gap}$ represents an interval between a first pressing roll and a second pressing roll.

In addition, the electrode film subjected to the lamination step may have a pressing ratio of 20% or less, 18% or less, 15% or less, 5-15%, 6-15%, 7-15%, or 9-13%.

Herein, the pressing ratio may be defined as a ratio of the thickness of an electrode film after the lamination step based on the thickness of the electrode film before the lamination step, and may be represented by the following Formula 3:

[Formula 3]

$$\text{Pressing ratio } (\%) = (T_1 - T_2)/T_1 \times 100$$

wherein $T_1$ represents the thickness of an electrode film before the lamination step, and $T_2$ represents the thickness of the electrode film after the lamination step.

When the pressing ratio satisfies the above-defined range, it is possible to provide the resultant electrode film with adequate density and porosity, and to realize excellent adhesion between the electrode film and the current collector.

Before and after the lamination of the electrode film with the current collector, an increase in apparent density may be represented by the following Formula 4:

[Formula 4]

$$\text{Increase in apparent density (\%)} = (D_2 - D_1)/D_1 \times 100$$

wherein $D_1$ represents the apparent density (g/cm$^3$) of an electrode film before the lamination step, and $D_2$ represents the apparent density (g/cm$^3$) of the electrode film after the lamination step.

The electrode film may have an increase in apparent density of 5-30%, 7-25%, or 10-20%, before and after its lamination with the current collector. Herein, each of $D_1$ and $D_2$ may range from 2.75 g/cm$^3$ to 3.5 g/cm$^3$. Meanwhile, when the electrode film satisfies the above-defined range of an increase in apparent density, it is possible to improve the adhesion between the electrode film and the current collector and to prevent the problem of a porosity beyond the target range or damages to the positive electrode active material or current collector.

An apparent density before and after the lamination of the electrode film with the current collector may be calculated by measuring the weight and thickness of the electrode film before lamination, measuring the weight and thickness of the electrode after lamination, and calculating the weight and thickness of the film from which the weight and thickness of the current collector are subtracted.

In addition, the dry electrode film may have an active material loading amount of 3-15 mAh/cm$^2$, particularly 4-10 mAh/cm$^2$.

Herein, the active material loading amount is a value calculated according to the following Formula 5:

Active material loading amount (mAh/cm$^2$) = Capacity (mAh/g) of active material x Weight ratio (wt%) of active material in dry electrode film x Weight per unit area (g/cm$^2$) of dry electrode film     [Formula 5]

In addition, the interfacial resistance between the dry electrode film and the current collector may be 5 $\Omega \cdot$cm$^2$ or less, particularly 2 $\Omega \cdot$cm$^2$ or less. Herein, the interfacial resistance may be calculated by determining the resistance value between the dry electrode film and the current collector layer as a potential difference measured among multiple probes, after applying an electric current of 100 $\mu$A to the electrode through the multiprobe (MP) resistance test method. When the interfacial resistance satisfies the above-defined range, the secondary battery obtained subsequently may be provided with improved performance.

FIG. 2 is a schematic view illustrating the step of laminating an electrode film on both surfaces of a current collector according to an embodiment of the present disclosure. In other words, in lamination step 200, the electrode film 230 obtained from the preceding step may be pressed on and attached to a current collector 220 to a desired thickness by using a pair of lamination rolls 210, thereby providing a finished electrode 240.

In still another aspect of the present disclosure, there is provided a dry electrode obtained by the method for manufacturing a dry electrode. There is also provided a secondary battery including the dry electrode, wherein the dry electrode is a positive electrode, and including an electrode assembly including a positive electrode, a negative electrode and a separator and received in a battery casing (cylindrical casing, prismatic casing, pouch, or the like) together with a lithium-containing nonaqueous electrolyte. Further, there is provided an energy storage system including the secondary battery as a unit cell.

Herein, since the particular structures of the secondary battery and the energy storage system are known to those skilled in the art, and detailed description thereof will be omitted in the present disclosure.

In yet another aspect of the present disclosure, there is provided a system for manufacturing a dry electrode. The system includes: a blender configured to mix ingredients of an electrode mixture including an active material, a conductive material and a fluorine-containing binder; a kneader configured to knead the mixture of the ingredients to form mixture lumps; a pulverizer configured to pulverize the mixture lumps to form a mixed powder for an electrode; a calender configured to form a dry electrode film from the mixed powder for an electrode; and a lamination roll configured to dispose the dry electrode film on at least one surface of a current collector and to carry out lamination.

The blender is a mixer configured to mix the ingredients. As described above, the ingredients of the mixture may be mixed at a rate of 5,000-20,000 rpm. The kneader is a device for fibrilizing a fluorine-containing binder and dispersing the ingredients of the mixture according to the present disclosure, and the mixture may be obtained in the form of mixture lumps through the kneading in the kneader. For this purpose, the kneader may be set to a temperature of 70-200°C and a pressure condition equal to or higher than ambient pressure. Particularly, the kneader may be set to a temperature of 90-180°C and a pressure condition of 1-100 atm, more particularly 10-80 atm.

The pulverizer is configured to pulverize the obtained mixture lumps to form a mixed powder for an electrode, and may include a blender or a grinder.

The calender is a device for molding the mixed powder for an electrode into a film shape. For example, the calender may include a pair of rollers facing each other, and the film thickness may be controlled from the interval between the rollers.

The lamination roll functions to attach the dry electrode film formed by the calender to at least one surface of the current collector and to carry out pressing.

The porosity of the dry electrode film according to the present disclosure may be determined by the calender and the lamination roll.

In other words, the system for manufacturing a dry electrode according to the present disclosure is characterized by including a kneader and a pulverizer.

The particular structures of the blender, kneader, calender and lamination roll are known to those skilled in the art, and detailed description thereof will be omitted herein.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Comparative Example 1

<Manufacture of Electrode Film>

First, 96 g of lithium nickel cobalt manganese aluminum oxide (NCMA, $Li[Ni_{0.73}Co_{0.05}Mn_{0.15}Al_{0.02}]O_2$)) as a positive electrode active material, 1 g of carbon black as a conductive material and 3 g of polytetrafluoroethylene (PTFE) as a fluorine-containing binder were introduced to a blender and mixed at 50 rpm for 5 minutes to prepare a mixture. The temperature of a kneader was stabilized at 150°C, the mixture was introduced to the kneader, and the kneader was operated under a cover pressure of 1.1 atm at a rate of 50 rpm for 5 minutes to obtain mixture lumps. The mixture lumps were introduced to a blender, pulverized at 10,000 rpm for 1 minute, and classified by using a sieve having pores with a size of 1 mm to obtain a mixed powder for an electrode. Then, the resultant mixed powder for an electrode was introduced to a lab calender (roll diameter: 160 mm, roll temperature: 100°C) to obtain an electrode film. The resultant electrode film had a thickness of 80 $\mu$m.

Examples 1-3

<Manufacture of Electrode Film>

An electrode film was obtained in the same manner as Comparative Example 1, except that polytetrafluoroethylene (PTFE) as a fluorine-containing binder was heat treated by using a furnace at the heat treatment temperature and for the heat treatment time as shown in the following Table 1 under the atmosphere of air and then cooled to room temperature (25°C).

Comparative Examples 2 and 3

<Manufacture of Electrode Film>

An electrode film was obtained in the same manner as Comparative Example 1, except that polytetrafluoroethylene (PTFE) as a fluorine-containing binder was heat treated by using a furnace at the heat treatment temperature and for the heat treatment time as shown in the following Table 1 under the atmosphere of air and then cooled to room temperature (25°C).

Comparative Example 4

<Manufacture of Electrode Film>

An electrode film was obtained in the same manner as Comparative Example 1, except that 87 g of lithium nickel cobalt manganese aluminum oxide (NCMA, $Li[Ni_{0.73}Co_{0.05}Mn_{0.15}Al_{0.02}]O_2$)) as a positive electrode active material, 1 g of carbon black as a conductive material and 12 g of polytetrafluoroethylene (PTFE) as a fluorine-containing binder were used, and polytetrafluoroethylene (PTFE) was heat treated by using a furnace at the heat treatment temperature and for the heat treatment time as shown in the following Table 1 under the atmosphere of air and then cooled to room temperature (25°C).

Evaluation of Performance

The electrode film according to each of Examples 1-3 and Comparative Examples 1-4 was evaluated as follows. The results are shown in Table 1.

(1) Elongation at Break (%)

The elongation at break of each electrode film was determined by using a UTM instrument (ZwickRoell Co.) under the following test conditions.
Test Conditions: ASTM D 638, Pre-load 0.01 kg/cm, Test Speed 50 mm/min.

(2) Modulus (MPa)

The modulus of each electrode film was determined by using a UTM instrument (ZwickRoell Co.) under the following test conditions.
Test Conditions: ASTM D 638, Pre-load 0.01 kg/cm, Test Speed 50 mm/min.

(3) Tensile Strength (MPa)

The tensile strength of each electrode film was determined by using a UTM instrument (ZwickRoell Co.) under the following test conditions.
Test Conditions: ASTM D 638, Pre-load 0.01 kg/cm, Test Speed 50 mm/min.
(4) In the following Table 1, an increase in each physical property value according to Example is shown based on the physical property according to Comparative Example.
The increase in each physical property was calculated according to the formula of [(Physical property according to Example - Physical property according to Comparative Example) / ( Physical property according to Comparative Example) X 100 (%)]

[Table 1]

| | Type of active material / PTFE binder heat treatment temperature and time conditions | Elongation at break (%) | Modulus (MPa) | Tensile strength (MPa) |
|---|---|---|---|---|
| Ex. 1 | NMCA / 310°C, 30 min. | 7.4 | 32.7 | 1.1 |
| Ex. 2 | NMCA / 300°C, 30 min. | 7.8 | 40.9 | 1.4 |
| Ex. 3 | NMCA / 290°C, 30 min. | 7.2 | 38.3 | 1.4 |
| Comp. Ex. 1 | NMCA, heat treatment was not applied | 6.4 | 31.6 | 1.0 |
| Comp. Ex. 2 | NMCA / 320°C, 30 min, | Molding is not available | Molding is not available | Molding is not available |
| Comp. Ex. 3 | NMCA / 280°C, 30 min. | 6.3 | 31.1 | 1.0 |
| Comp. Ex. 4 | NMCA / 300°C, 30 min. | 7.0 | 21.6 | 0.3 |

Referring to Table 1, it can be seen that the electrode films obtained by heat treating the fluorine-containing binder at 290-310°C and mixing the heat treated fluorine-containing binder with an active material, or the like, according to Examples 1-3 show significantly improved mechanical properties, including elongation at break, modulus and tensile strength, as compared to the electrode films, using no heat treatment or not satisfying the above-defined heat treatment temperature condition, according to Comparative Examples 1-3. In addition, although the electrode film according to Comparative Example 4 satisfies the condition of elongation at break (7% or more), it includes the fluorine-containing binder in an amount of 12 parts by weight based on 100 parts by weight of the total weight of the electrode film. Therefore, in the case of Comparative Example 4, since the content of fluorine-containing binder does not fall within the range of 0.5-10 parts by weight based on 100 parts by weight of the total weight of the electrode film, the electrode film shows a significantly low tensile strength.

**Claims**

1.  An electrode film, comprising an active material and a fluorine-containing binder,

    wherein the fluorine-containing binder comprises a polytetrafluoroethylene (PTFE) binder,
    the active material comprises a lithium transition metal oxide, and
    the content of the fluorine-containing binder is 0.5-10 parts by weight based on 100 parts by weight of the total weight of the electrode film, and
    which shows an elongation at break of 7% or more.

2.  The electrode film according to claim 1, wherein the lithium transition metal oxide comprises a lithium cobalt oxide, a lithium manganese oxide, a lithium nickel oxide, a lithium nickel-manganese-cobalt oxide, a lithium nickel-manganese-cobalt-aluminum oxide, a lithium copper oxide, or two or more of them.

3.  The electrode film according to claim 2, wherein the lithium nickel-manganese-cobalt-aluminum oxide is represented by the following Chemical Formula 1:

    $$[\text{Chemical Formula 1}] \qquad Li_a[Ni_bCo_cMn_dAl_e]_{1-f}M^1_fO_2$$

    wherein $M^1$ represents Zr, B, W, Mg, Ce, Hf, Ta, La, Ti, Sr, Ba, F, P, S, or two or more of them, $0.8 \le a \le 1.2$, $0.5 \le b \le 0.99$, $0 < c < 0.5$, $0 < d < 0.5$, $0.01 \le e \le 0.1$, and $0 \le f \le 0.1$.

4.  The electrode film according to claim 3, wherein the lithium nickel-manganese-cobalt-aluminum oxide is represented by the following Chemical Formula 2:

    $$[\text{Chemical Formula 2}] \qquad Li_a[Ni_bCo_cMn_dAl_e]_{1-f}O_2$$

    wherein $0.8 \le a \le 1.2$, $0.5 \le b \le 0.99$, $0 < c < 0.5$, $0 < d < 0.5$, $0.01 \le e \le 0.1$, and $0 \le f \le 0.1$.

5.  The electrode film according to claim 1, which shows an elongation at break of 7% or more and a tensile strength of 1.4 MPa or more.

6.  The electrode film according to claim 5, which shows an elongation at break of 7.2-7.8%, tensile strength of 1.4 MPa and a modulus of 38.3-40.9 MPa.

7.  The electrode film according to claim 1, comprising an active material, a fluorine-containing binder and a conductive material.

8.  The electrode film according to claim 7, wherein the conductive material comprises activated carbon, graphite, carbon black, ketjen black, carbon nanotubes, or two or more of them.

9.  The electrode film according to claim 7, wherein the content of the active material is 85-98 parts by weight, the content of the conductive material is 0.5-5 parts by weight and the content of the fluorine-containing binder is 0.5-10 parts by weight.

10. The electrode film according to claim 1, which is obtained through a dry process.

11. A method for manufacturing the electrode film as defined in claim 1, comprising the steps of:

    heat treating a fluorine-containing binder at 290-310°C;
    preparing a mixture containing an active material and the heat-treated fluorine-containing binder;
    kneading the mixture at 70-200°C under a pressure equal to or higher than ambient pressure to prepare mixture lumps;

pulverizing the mixture lumps to obtain a mixed powder for an electrode; and
introducing the mixed powder for an electrode between a plurality of rolls to carry out calendering, thereby forming an electrode film.

12. The method for manufacturing the electrode film according to claim 11, wherein the step of kneading the mixture to prepare mixture lumps is carried out in a kneader under a pressure equal to or higher than ambient pressure.

13. A method for manufacturing an electrode, comprising a step of laminating the electrode film as defined in any one of claims 1 to 10 on a current collector.

14. The method for manufacturing an electrode according to claim 13, wherein the electrode film has a compression ratio of 30-50% in the step of laminating.

15. An electrode, comprising:

a current collector; and
the electrode film as defined in any one of claims 1 to 10, disposed on at least one surface of the current collector.

16. The electrode according to claim 15, wherein the current collector further comprises a conductive primer layer on at least one surface thereof.

17. A secondary battery comprising a positive electrode, a negative electrode and a separator interposed between the positive electrode and the negative electrode, wherein at least one of the positive electrode and the negative electrode is the electrode as defined in claim 15.

18. An energy storage system comprising the secondary battery as defined in claim 17 as a unit cell.

FIG. 1

100

FIG. 2

200

| | INTERNATIONAL SEARCH REPORT | International application No. |
|---|---|---|
| | | **PCT/KR2023/005412** |

**A. CLASSIFICATION OF SUBJECT MATTER**

**H01M 4/1391**(2010.01)i; **H01M 4/525**(2010.01)i; **H01M 4/58**(2010.01)i; **H01M 4/62**(2006.01)i; **H01M 4/66**(2006.01)i; **H01M 4/04**(2006.01)i; **H01M 4/131**(2010.01)i; **H01M 4/136**(2010.01)i; **H01M 4/1397**(2010.01)i

According to International Patent Classification (IPC) or to both national classification and IPC

**B. FIELDS SEARCHED**

Minimum documentation searched (classification system followed by classification symbols)

H01M 4/1391(2010.01); H01M 10/05(2010.01); H01M 4/02(2006.01); H01M 4/04(2006.01); H01M 4/06(2006.01); H01M 4/48(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 전극용 필름(electrode film), 파단 신율(elongation at break), 활물질(active material), 바인더(binder), 열처리(heat)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-026984 A (DAIDO METAL CO., LTD.) 01 February 2007 (2007-02-01)<br>See abstract; claims 1 and 4; and paragraphs [0015] and [0018]-[0021]. | 1-18 |
| Y | JP 2001-266854 A (MATSUSHITA ELECTRIC IND. CO., LTD.) 28 September 2001 (2001-09-28)<br>See claim 1; and paragraphs [0007], [0009] and [0038]. | 1-18 |
| Y | KR 10-2015-0024251 A (SAMSUNG ELECTRONICS CO., LTD.) 06 March 2015 (2015-03-06)<br>See paragraphs [0118], [0124] and [0129]-[0131]. | 3-4,16 |
| A | JP 4059556 B2 (SANYO ELECTRIC CO., LTD. et al.) 12 March 2008 (2008-03-12)<br>See claims 1-3; and paragraphs [0010]-[0011]. | 1-18 |
| A | CN 112038564 A (LIRONG TECHNOLOGY CO., LTD.) 04 December 2020 (2020-12-04)<br>See claim 1; and paragraphs [0037]-[0039]. | 1-18 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/005412** |

| Patent document cited in search report | | | Publication date (day/month/year) | Patent family member(s) | | | Publication date (day/month/year) |
| --- | --- | --- | --- | --- | --- | --- | --- |
| JP | 2007-026984 | A | 01 February 2007 | JP | 4931383 | B2 | 16 May 2012 |
| | | | | US | 2007-0020514 | A1 | 25 January 2007 |
| JP | 2001-266854 | A | 28 September 2001 | None | | | |
| KR | 10-2015-0024251 | A | 06 March 2015 | KR | 10-1696902 | B1 | 17 January 2017 |
| JP | 4059556 | B2 | 12 March 2008 | JP | 11-273665 | A | 08 October 1999 |
| CN | 112038564 | A | 04 December 2020 | EP | 3748736 | A1 | 09 December 2020 |
| | | | | JP | 2020-196887 | A | 10 December 2020 |
| | | | | JP | 7135265 | B2 | 13 September 2022 |
| | | | | KR | 10-2020-0139634 | A | 14 December 2020 |
| | | | | US | 11616218 | B2 | 28 March 2023 |
| | | | | US | 2020-0388822 | A1 | 10 December 2020 |

Form PCT/ISA/210 (patent family annex) (July 2022)

## REFERENCES CITED IN THE DESCRIPTION

**Patent documents cited in the description**

- KR 1020220049211